# EUROPÄISCHE PATENTSCHRIFT

(11) **EP 0 441 918 B1**
(45) Veröffentlichungstag und Bekanntmachung des Hinweises auf die Patenterteilung: **24.05.1995**
(21) Anmeldenummer: 90911810.1
(22) Anmeldetag: 27.07.1990
(51) Int. Cl.: E21D 15/44, F16K 17/04

(54) **DRUCKBEGRENZUNGSVENTIL MIT TEFLONDICHTUNG**
PRESSURE LIMITING VALVE WITH TEFLON SEAL
LIMITEUR DE PRESSION AVEC JOINT TEFLON

(30) Priorität: 01.09.1989 DE 3943495; 06.07.1990 DE 4021622
(43) Veröffentlichungstag der Anmeldung: 21.08.1991
(73) Patentinhaber: RICHARD VOSS GRUBENAUSBAU GMBH, 58239 Schwerte (DE)
(72) Erfinder: VOSS, Richard, D-5840 Schwerte (DE)
(74) Vertreter: Schulte, Jörg, Dipl.-Ing.
(86) Internationale Anmeldenummer: DE9000581
(87) Internationale Veröffentlichungsnummer: WO9103621

(56) Entgegenhaltungen:
- EP-A- 0 140 052
- EP-A- 0 191 919
- EP-A- 0 241 952
- DE-A- 3 637 888
- FR-A- 2 010 534
- FR-A- 2 561 347
- GB-A- 2 013 307
- Aircraft Engineering, Band 55, Nr. 12, Dezember 1983, (London, GB), R.M. SMITH:"Contemporary Seal Designs Using Low Friction Materials", Seiten 2-5 siehe den ganzen Artikel
- Energie Fluide, Band 25, Nr. 1, Januar/Februar 1986, (Paris, FR), "ConceptOmegat: l'Element Moderne d'Etancheite", Seiten 80-83, siehe den ganzen Artikel

## Beschreibung

Die Erfindung betrifft ein Druckbegrenzungsventil zur Sicherung hydraulischer Einheiten im untertägigen Bergbau, insbesondere des hydraulischen Strebausbaues gegen plötzliche Überlastung infolge Gebirgsschlag o. ä. Einwirkungen, mit dem im Ventilgehäuse angeordneten, in der Eintrittsbohrung gegen die Kraft der Ventilfeder verschieblichen, das Druckmedium gegen die Querbohrungen sperrenden Ventilkolben, der eine Sackbohrung und davon ausgehende Radialbohrungen aufweist, die mit einem im Anschlußstück angeordneten Dichtring aus einem sehr geringe Reibung erzeugenden, eine große Härte aufweisenden Kunststoff korrespondierend ausgebildet sind.

Derartige, auch als Sicherheitsventile bezeichnete Druckbegrenzungsventile werden dort eingesetzt, wo durch auftretende Überlastung eine Beschädigung des Systems, insbesondere im untertägigen Steinkohlenbergbau in Form von Hydraulikstempeln, zu befürchten ist. Diese Hydraulikstempel werden sowohl als Einzelstempel wie auch in Ausbaugestellen vor allem im Schildausbau integriert eingesetzt. Aufgrund der besonderen Gefährdung ist bei derartigen Schildausbaugestellen aber auch bei Hydraulikeinzelstempeln der Einsatz von Druckbegrenzungsventilen durch die Aufsichtsbehörden vorgeschrieben, um bei Überlastung bleibende Beschädigungen oder gar Zerstörungen und damit Gefährdungen für die Bergleute zu vermeiden. Aus der DE-A 28 30 891 ist ein Druckbegrenzungsventil bekannt, bei dem über eine Ventilfeder, die zwischen Verschlußschraube und Ventilkolben eingespannt ist, Überdrücke im Hydrauliksystem abgebaut werden. An den Ventilteller oder Federteller ist eine kegel- oder kugelförmiger Ventilschließkörper angeformt, der bei auftretender Überlast aus dem Ventilsitz angehoben wird. An den Kolben ist ein Dämpfungszylinder angeformt, der die Durchströmöffnungen beschränkt. Derartige Ventile gewähren aber für den vorgesehenen Einsatz als Druckbegrenzungsventile nicht die notwendige Schließsicherheit. Darüber hinaus ist eine richtige Auslegung insbesondere der Feder so schwierig, daß ein richtiges und frühzeitiges Ansprechen eines derartigen Gebirgsschlagventils nicht erreicht werden kann.

Aus der DE-A 33 14 837, der GB-A-2 013 307 und der FR-A-2 010 534 ist ein anderes Druckbegrenzungsventil bekannt, in dessen Ventilgehäuse die Ventilfeder so angeordnet ist, daß sie auf den Federteller und damit auf den Ventilkolben drückt und so das Öffnen des Ventils entsprechend der Einstellung beeinflußt. Der Ventilkolben ist an einer in der Führung ausgebildeten Kolbenbohrung verschieblich geführt, wobei die notwendige Abdichtung über einen in einer Nut sitzenden O-Ring (Dichtring) erfolgt. Der O-Ring muß jeweils vollständig von den Radialbohrungen des Ventilkolbens überfahren werden, bevor das Druckmedium im Falle einer Überlast austreten kann. aufgrund dieser starken Belastung erreichen derartige O-Ring-Ventile nur relativ geringe Standzeiten, da die sich bildende "Dichtnase" leicht abreißt. Nachteilig bei diesen bekannten Druckbegrenzungsventilen ist weiter, daß sie lediglich Durchflußwerte von 40 bis 100 Liter pro Minute zulassen. Für die notwendige Sicherheit und insbesondere die schnelle Ansprechbarkeit solcher Ventile ist dies unbefriedigend. Nachteilig ist außerdem, daß die zum Einsatz kommenden Ventilfedern aufgrund der zu berücksichtigenden Drücke erhebliche Drahtstärken und Wendeldurchmesser aufweisen müssen, was wiederum entsprechende Abmessungen für die gesamten Ventile erfordert. Je größer die Durchflußmenge wird, desto größer müssen dementsprechend auch die Ventilfedern und damit die gesamten Ventilgehäuse werden. Dann aber ist insbesondere im untertägigen Steinkohlenbergbau eine Verwertung derartiger Druckbegrenzungsventile allein schon aufgrund der zu großen Abmessungen nicht möglich. Auch sind die notwendigen Querschnitte zur Abführung des Druckmediums nicht vorhanden. Man hat versucht, durch Verwendung größerer Ventilkolben und die besondere Ausbildung dieses Ventilkolbens sowie Zuordnung eines Steuerkolbens die Durchflußmenge zu erhöhen. Die Ansprechzeiten sind aber dann unbefriedigend, weil die durch die aus Kunststoffen mit einer Shore-Härte von A 90 bestehenden O-Ringe erzeugte Reibung zu groß wird. Aufgrund solcher unbefriedigenden Schließwerte arbeiten die Ventile zu ungenau. Darüber hinaus ist die Standzeit derartiger O-Ringe sehr ungünstig, weil die sich aufgrund der Verformbarkeit der O-Ringe bildende "Dichtnase" abreißen kann.

Der Erfindung liegt daher die Aufgabe zugrunde, ein Druckbegrenzungsventil mit günstigen Schließwerten und einer wirksame und hohe Standzeiten gewährleistenden Abdichtung zu schaffen.

Die Aufgabe wird erfindungsgemäß dadurch gelöst, daß der Dichtring aus Polytetrafluorethylen (PTFE) besteht und ein im Querschnitt rechteckiger Ring ist, daß die den rechteckigen Dichtring aufnehmende Ringnut an der Dichtkante im Nutgrund eine Fase aufweist, die den Nutgrund und die Stützwand, die geringfügig oberhalb der Radialbohrungen des geschlossenen Ventils verläuft, verbindet.

Damit erreicht man überraschend günstige Schließwerte, weil die Reibung auf ein so geringes Maß reduziert ist, daß die Bewegung auch eines Ventilkolbens mit sehr großem Durchmesser dadurch nicht beeinträchtigt wird. Derartige nicht mehr flexible Dichtringe führen dennoch zu einer wirksamen Abdichtung, weisen extrem hohe Standzeiten auf und lassen die schon erwähnten günstigen Schließwerte und hohen Druckflußwerte erreichen, weil die Reibung zwischen Dichtring und Ventilkolben auf ein Minimum reduziert ist bzw. weil Kolben mit großen Bohrungen verwendet werden können. Eine gezielte Abdichtung wird dabei erreicht, weil der Dichtring genau an der Dichtkante eine ringförmige Dichtzone ergebend geformt ist. Es ist nun auch vorteilhaft möglich, dem Dichtkolben beispielsweise die Form einer Rohrhülse mit sehr großem Durchmesser zu geben, was zu einer Vergrößerung der zulässigen und möglichen Durchflußmenge wesentlich beiträgt, insbesondere bei Einsatz eines geringeren Durchmesser aufweisenden Steuerkolbens am Ventilkolben. Die rechteckige Ausbildung des Dichtringes ermöglicht eine leichte Montage und eine sichere Anordnung in der zugeordneten Ringnut. Über die den rechtekkigen Dichtring aufnehmende Ringnut und die an der Dichtkante im Nutgrund ausgebildete Fase wird erreicht,daß der Dichtring genau im Bereich der Dichtkante die gewünschte ringförmige Dichtzone bildet, da er beim Einführen in die Ringnut in diesem Bereich so beansprucht wird, daß er sich an der Dichtkante wirksam an den Dichtkolben anschmiegt und hier für eine bleibende ringförmige Abdichtung sorgt. Die Fase, die als Radius ausgebildet ist, verbindet den Nutgrund und die Stützwand, die geringfügig oberhalb der Radialbohrungen des geschlossenen Ventils verläuft, so daß die beschriebene Verformung des Dichtringes und sein Anpressen an den sich bewegenden Dichtkolben genau in der ringförmigen Dichtzone wirksam wird. Das zum Einsatz kommende Material des Dichtringes sorgt mit dafür, daß auch bei längeren Stillstandzeiten, das heißt bei einem Nichtansprechen des Druckbegrenzungsventils dennoch die gewünschte und vorgegebene Dichtzone genau eingehalten wird.

Eine gezielte Anlage des Dichtringes im Bereich der Dichtkante wird erreicht, wenn die Fase teilkreisförmig ausgebildet ist. Außerdem sorgt dies dafür, daß der Dichtring selbst keinen Schaden nimmt, sondern sich vielmehr, wie erwähnt, vorteilhaft an den Dichtkolben anschmiegt.

Bei einem Druckberenzungsventil mit Durchflußmengen von mehr als 2 000 Litern kann trotzdem mit vorteilhaften Baumaßen gearbeitet werden, indem bei einem Ventilkolben mit integriertem Steuerkolben und zwischen den Räumen mit gleichem Druck ausgebildeten, als Austrittsbohrungen dienenden Querbohrungen beidseitig der Querbohrungen Dichtringe angeordnet sind, wobei die Fasen an den gegenüberliegenden Stützwänden ausgebildet sind. Obwohl nun zwei bzw. sogar drei Dichtringe die Bewegung insbesondere den Rückhub des Ventilkolbens und des Steuerkolbens durch Reibung beeinträchtigen, ist eine schnelles Zurückschwingen bzw. Zurückbewegen des Ventilkolbens gesichert, weil die besondere Ausbildung der Dichtringe trotz vollständiger Abdichtung den Bewegungsablauf des Ventilkolbens und Steuerkolbens nicht oder nur unwesentlich beeinträchtigt. Vorteilhaft ist dabei, daß je nach Einsatzbedingungen auch verbreiterte Dichtringe zum Einsatz kommen können, ohne daß dadurch die Reibung nennenswert erhöht würde. Dabei ist es vorteilhaft, wenn auch der dem Steuerkolben zugeordnete Dichtring aus geringe Reibung erzeugendem Kunststoff besteht und in einer mit Fase ausgerüsteten Nut angeordnet ist.

Nach einer die Herstellung besonders begünstigenden Ausbildung der Erfindung ist vorgesehen, daß der Dichtring von einem Kuststoffrohr abgedreht ist. Damit kann die zweckmäßige Formgebung genau eingehalten werden, ohne daß der Herstellungsaufwand belastend wirkt. Derartige Dichtringe können so in großer Anzahl und ohne allzu großen Aufwand schnell gefertigt werden.

Als besonders vorteilhaft hat sich herausgestellt, wenn der Kunststoff der Dichtringe ein Polytetrafluorethylenmaterial mit einer Shore-Härte von D 50 - 90, vorzugsweise 54 - 60 ist. Ein aus diesem Teflon-Kunststoffmaterial TFM 1 600 gefertigter Dichtring hat eine geringe Flexibilität, ist aber dennoch einwandfrei zu handhaben und zwar auch dann, wenn, wie erfindungsgemäß vorgesehen ist, in den Ringnuten Fasen ausgebildet sind. Aufgrund der mit den rechteckig ausgebildeten Dichtringen erreichten flächigen Abdichtung bzw. gezielten Abdichtung ist dieses Material wegen seiner besonderen Zusammensetzung vor allem bezüglich der geringen Reibung vorteilhaft. Darüber hinaus lassen sich mit diesem Teflon-Kunststoff TFM 1600 sehr günstige Standzeiten von Druckbegrenzungsventilen sicherstellen.

Da, wie bereits erwähnt, die aus Teflon bestehenden Dichtringe keine große Flexibilität aufweisen, sind besondere Maßnahmen vorzusehen, um sie wirksam im Bereich des Ventilkolbens festlegen zu können. Dies wird erfindungsgemäß dadurch erreicht, daß in die Eintrittsbohrung des Anschlußstücks eingangsseitig eine den Dichtring fixierende, nach innen und außen abgesetzte Steckmuffe eingesetzt und mit einem O-Ring ausgerüstet ist. Andererseits wird zur Festlegung des oberen Dichtrings, falls ein solcher vorhanden ist, vorgesehen, daß in die Eintrittsbohrung im Anschlußstück ausgangsseitig eine den oberen Dichtring fixierende und zugleich den Steuerkolben führende, einen O-Ring aufweisende Schraubführung angeordnet ist. Eingangs- und wenn notfalls auch ausgangsseitig ist hier gemäß der Öffnungsrichtung eines derartigen Druckbegrenzungsventils eine wirksame Festlegung des jeweiligen Dichtringes sichergestellt. Die Steckmuffe wird vorteilhaft durch den Druck des Druckmediums beaufschlagt und im Anschlußstück festgesetzt, ohne daß es einer Verriegelung bzw. einer Verschraubung bedarf. Die Schraubführung dagegen wird vom Federraum aus eingeschraubt und legt dabei den oberen Dichtring wirksam fest, ohne daß sich dieser während des Betriebes aus seiner Lage in der zugeordneten Ringnut entfernen kann.

Die Erfindung zeichnet sich insbesondere dadurch aus, daß das Druckbegrenzungsventil in seiner Funktionsweise wesentlich verbessert ist und ausgesprochen günstige Schließwerte und günstige Standzeiten aufweist, weil der Ventilkolben nicht durch Reibung der abdichtenden Dichtringe beeinträchtigt bzw. behindert wird und diese demtentsprechend auch geschont werden. Mit Hilfe der erfindungsgemäßen Lösung ist es erstmals möglich, die Dichtkolben praktisch auf beliebige Durchmesser zu bringen, weil ihre Bewegung, insbesondere ihr Schließen durch die zwangsweise erforderlichen Dichtringe so wenig beeinträchtigt wird, daß damit die Bewegung des Ventilkolbens, auch wenn er einen wesentlich vergrößerten Durchmesser aufweist, praktisch unbeeinflußt bleibt. Derartige Druckbegrenzungsventile können dann aufgrund des sehr großen Ventilkolbens Durchflußmengen von 2000 Liter und mehr zulassen, so daß sie gerade den Bedingungen im untertägigen Bergbau vorteilhaft genügen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein einfaches Druckbegrenzungsventil mit rechteckförmigen Teflondichtringen,
- Fig. 2: eine vergrößerte Darstellung des Ventils gemäß Fig. 1 im Abdichtungsbereich,
- Fig. 3: eine schematisierte und die Fasen in den Ringnuten erläuternde vergrößerte Wiedergabe des Druckbegrenzungsventils gemäß Fig. 1 und 2,
- Fig. 4: ein Druckbegrenzungsventil mit Differenzventilkolben im Schnitt und
- Fig. 5: eine vergrößerte Wiedergabe des Abdichtungsbereiches des aus Fig. 4 ersichtlichen Druckbegrenzungsventils.

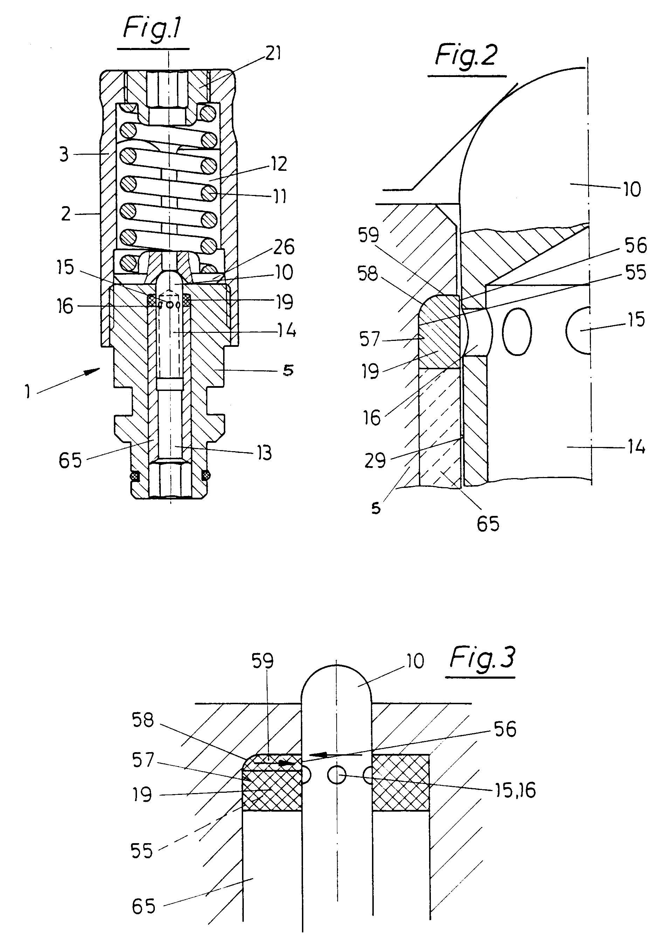

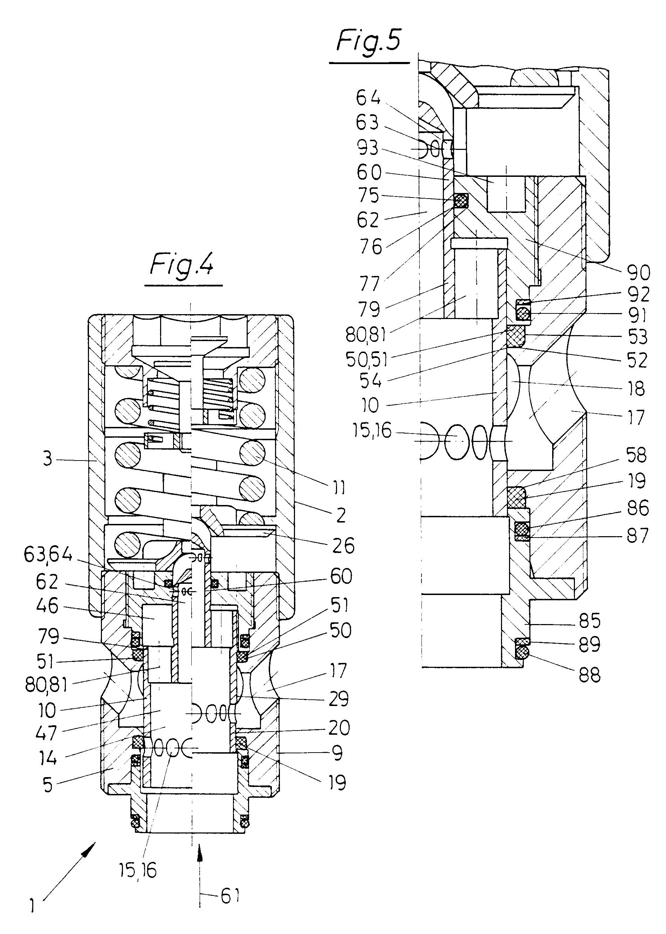

Fig. 1 zeigt ein Druckbegrenzungsventil (1) mit einem im wesentlichen zweiteiligen Ventilgehäuse (2), wobei das Oberteil (3) und das Anschlußstück(4, 5) miteinander verschraubt sind. Das Anschlußstück(4, 5) wird hier über eine Steckverbindung bei spielsweise mit einem Schlauch oder einem zu schützenden Aggregat verbunden, während nach Fig. 4 ein Außenanschlußgewinde (9) vorgesehen ist, über das ein derartiges Druckbegrenzungsventil (1) in das zu schützende Aggregat eingeschraubt werden kann.

Innerhalb des Ventilgehäuses (2) ist der Ventilkolben (10) gegen die Kraft der Ventilfeder (11) verschieblich in der Eintrittsbohrung (13) gelagert. Die Ventilfeder (11) füllt den Federraum (12) nicht aus. Sie liegt an der Innenwand des Oberteils (3) an und läßt ein Durchtreten des Druckmediums von der Eintrittsbohrung (13) über die Sackbohrung (14) und die Radialbohrungen (15, 16) hindurch zu, wobei über die Stellschraube (21) der jeweilige Öffnungswert des Druckbegrenzungsventils (1) vorgegeben werden kann. In der Stell schraube (21) ist eine Bohrung vorgesehen, die das Austreten des Druckmediums zuläßt.

Beim Ansprechen des Ventils muß der Ventilkolben (10) den Dichtring (19) überfahren, der in einer Ringnut (55) untergebracht ist. Den besonderen Aufbau der Ringnut (55) verdeutlichen die Fig. 2 und 3.

Der Ventilkolben (10) liegt am Federteller (26) an, der die Ventilfeder (11) trägt, die sich auf der gegenüberliegenden Seite an der Stellschraube (21) bzw. am Oberteil (3) abstützt.

Die Außenwandung (29) des Ventilkolbens (10) ist glatt ausgeführt, so daß er sich ohne weiteres, wie aus Fig. 2 ersichtlich, an dem Dichtring (19) entlangbewegen kann. Dabei ist oberhalb der Radialbohrungen (15, 16) genau im Bereich der Dichtkante (56) ein dichtes Anliegen des Dichtringes (19) und damit eine optimale Abdichtung dadurch erreicht, daß Nutgrund (57) und Stützwand (59), wie aus den Fig. 2 und 3 ersichtlich, über eine Fase (58) verbunden sind. Dadurch wird erreicht, daß sich der Dichtring (19) hier so verformt bzw. zwangsweise so verformt wird, daß ein immer dichtes Anliegen im Bereich der Dichtkante (56) gewährleistet ist. Die Fase (58) ist dabei vorteilhaft bogenförmig oder teilkreisförmig ausgebildet, um ein Beschädigen des aus sehr unflexiblem Material bestehenden Dichtringes (19) zu verhindern.

Fig. 3 verdeutlicht in Gegenüberstellung die Anordnung eines Dichtringes (19) innerhalb einer üblichen Nut (rechte Seite) und der mit Fase (58) ausgerichteten Nut (linke Seite). Zum Fixieren des Dichtringes (19) ist die Bohrung im Anschlußstück(4, 5) so erweitert, daß das Fixierrohrstück (65) den Dichtring (19) festlegend eingeschoben werden kann. Mit Hilfe der Pfeile ist verdeutlicht, wo sich der Dichtring (19) besonders dicht an den Ventilkolben (10) anlegt.

Bei der Ausführung nach den Fig. 4 und 5 ist als Ventilkolben (10) eine mit großer Abströmfläche versehene Rohrhülse (20) vorgesehen. Diese Rohrhülse (20) verfügt über die Sackbohrung (14) und die Radialbohrungen (15, 16). Auch hier ist durch den besonderen Dichtring (19) dafür Sorge getragen, daß das Druckmedium nicht aus dem Bereich der Eintrittsbohrung (13) in das Druckbegrenzungsventil (1) eintreten kann. Die Außenwandung (29) des Dichtkolbens (10) bzw. der Rohrhülse (20) ist durchgehend glatt ausgebildet, so daß beim Überfahren des Dichtringes (19) nur normale Reibung auftritt. An den Dichtkolben (10) ist mittig und damit in der Ventilachse ein Steuerkolben (60) angeformt, der entgegen der Öffnungsrichtung (61) über die Ventilfeder (11) belastet ist. Diese Ventilfeder (11) stützt sich auch hier an der Stellschraube (21) bzw. dem Federteller (26) ab, der auf dem Steuerkolben (60) aufliegt. Die im Federraum (12) angeordnete Ventilfeder (11) kann damit wirksam den Steuerkolben (60) so belasten, daß er und damit auch der Ventilkolben (10) nur bei Überschreiten der eingestellten Federkraft öffnen können. Die Einstellung der Ventilfeder (11) erfolgt über die hier erwähnte Stellschraube (21), die im Kopfteil verdrehbar angeordnet ist. Sie verfügt über einen Innensechskant, um auf diese Art und Weise die Verstellung einfacher durchführen zu können.

Die Abdichtung des Ventilkolbens (10) in Form der Rohrhülse (20) erfolgt einmal, wie bereits erwähnt, über den unteren Dichtring (19), der in einer Ringnut (55) untergebracht ist und zum anderen über den in der Ringnut (50) angeordneten Dichtring (51).

Das Druckmedium, das durch die Eintrittsbohrung (13) in das Druckbegrenzungsventil (1) einströmt, fließt über die Sackbohrung (14) bis an den die obere Begrenzung des Ventilkolbens (10) darstellenden Deckel (79) heran. Dieser Deckel (79) ist mit Durchströmöffnungen (80, 81) versehen, so daß das in der Sackbohrung (14) anstehende Druckmedium gleichzeitig auch in den Bereich oberhalb des Ventilkolbens (10) einströmt, so daß dieser sich in der dargestellten Position hält, weil in beiden Räumen (46, 47) gleiche Druckverhältnisse herrschen. Gleichzeitig strömt das Druckmedium auch durch den Steuerkolben (60) hindurch, der eine Sackbohrung (62) und endseitig angeordnete Radialbohrungen (63, 64) aufweist. Gegenüber dem Federraum (12) ist der Steuerkolben (60) mit seiner Sackbohrung (62) und den Radialbohrungen (63, 64) über den Dichtring (75) abgedichtet, der hier ebenfalls eine Nut (76) mit Fase (77) aufweisen soll , so daß erst bei Überfahren dieses Dichtringes (75) Druckmedium in den Federraum (12) eindringen kann. Dies ist aufgrund der Ausbildung des Ventilkolbens (10) und der im Deckel (79) ausgebildeten Durchströmöffnungen (80, 81) erst möglich, wenn die Kraft der Ventilfeder (11) überschritten wird, beispielsweise bei entsprechender Überlastung des Hydraulikaggregates infolge eines Gebirgsschlages. Da die Außenwand des Steuerkolbens (60) glatt ausgebildet ist, andererseits dieser Dichtring (75) einen relativ geringen Durchmesser aufweist, sind die auftretenden Reibungskräfte so gering, daß die Schließwerte des Gesamtventils dadurch nicht beeinträchtigt sind.

Die Dichtringe (19, 51) reiben auf der Außenwandung (29) des Ventilkolbens (10) bzw. der Rohrhülse (20), um den Bereich der Querbohrung (17) und damit die Umgebung vor dem Austritt des Druckmediums zu schützen. Beim Verschieben bzw. Verfahren des Ventilkolbens (10) führt diese Reibung gewollt zu einer Beeinträchtigung des Bewegungsablaufes. Beim Ansprechen des Ventils ist dies weitgehend unbeachtlich, beim Rückhub dagegen werden die günstigen Schließwerte dadurch sichergestellt, daß diese Dichtringe (19, 51) aus einem Teflon-Kunststoff TFM 1600 gefertigt sind. Derartige Dichtringe, die in Querschnitt rechteckig ausgebildet sind, erbringen ausgesprochen günstige Abdichtungswerte, weisen aber eine sehr geringe Reibung auf, so daß der Gang des Ventilkolbens (10) denkbar gering beeinträchtigt wird. Aufgrund der großen Härte dieses Teflon-Kunststoffes lassen sich optimale Standzeiten erreichen und durch die Verwendung des rechteckigen Dichtringes auch eine Optimierung der Abdichtung insgesamt, insbesondere im Zusammenhang mit den Fasen (58, 54 und 77). Auch der Dichtring (51) ruht nämlich in einer Ringnut (52) mit einer Stützwand (52) und Nutgrund (53) verbindenden Fase (54).

Der untere Dichtring (19), der in der Ringnut (55) untergebracht ist, kann trotz seiner geringen Flexibilität einfach montiert werden, da in die Eintrittsbohrung (13) von der Öffnungsrichtung (61) her eine Steckmuffe (85) eingeführt ist. Diese Steckmuffe (85) ist nach unten hin durch den O-Ring (86) und den Stützring (87) und nach oben hin durch den O-Ring (88) und den Stützring (89) abgedichtet. Entsprechendes verdeutlicht insbesondere Fig. 5. Der obere Bereich oder auch der Innenbereich des Druckbegrenzungsventils wird durch den Dichtring (51) gemäß Fig. 4 und 5 abgesichert und abgedichtet, indem er über die Schraubführung (90) festgelegt wird, die über den O-Ring (91) und den Stützring (92) abgedichtet ist. Das Montieren der Schraubführung (90) wird durch die Ausnehmungen (93) erleichtert, die ein Einschrauben in das Gewinde ohne Probleme ermöglichen. Die Steckmuffe (85) kann im übrigen einfach eingeführt werden, weil sie aufgrund ihrer Ausbildung durch das Druckmedium belastet und in das Anschlußstück (4, 5) hineingedrückt wird. Die Öffnung der Eintrittsbohrung (13) ist entsprechend erweitert, um sowohl die Steckmuffe (85) als auch die Schraubführung (90) andererseits aufnehmen zu können.

## Patentansprüche

1. Druckbegrenzungsventil (1) zur Sicherung hydraulischer Einheiten im untertägigen Bergbau, insbesondere des hydraulischen Strebausbaues gegen plötzliche Überlastung infolge Gebirgsschlag o. ä. Einwirkungen, mit dem im Ventilgehäuse (2) angeordneten, in der Eintrittsbohrung (13) gegen die Kraft der Ventilfeder (11) verschieblichen, das Druckmedium gegen die Austrittsbohrungen sperrenden Ventilkolben (10), der eine Sackbohrung (14) und davon ausgehende Radialbohrungen (15, 16) aufweist, die mit einem im Anschlußstück (4, 5) angeordneten Dichtring (19) aus einem sehr geringe Reibung erzeugenden, eine große Härte aufweisenden Kunststoff korrespondierend ausgebildet sind,
**dadurch gekennzeichnet,**
daß der Dichtring (19) aus Polytetrafluorethylen besteht und ein im Querschnitt rechteckiger Ring ist, daß die den rechteckigen Dichtring (19) aufnehmende Ringnut (55) an der Dichtkante (56) im Nutgrund (57) eine Fase (58) aufweist, die den Nutgrund (57) und die Stützwand (59), die geringfügig oberhalb der Radialbohrungen (15, 16) des geschlossenen Ventils (1) verläuft, verbindet.

2. Druckbegrenzungsventil nach Anspruch 1,
**dadurch gekennzeichnet,**
daß die Fase (58) teilkreisförmig ausgebildet ist.

3. Druckbegrenzungsventil nach Anspruch 1,
**dadurch gekennzeichnet,**
daß bei einem Ventilkolben (10) mit integriertem Steuerkolben (60) und zwischen den Räumen (46, 47) mit gleichem Druck ausgebildeten, als Austrittsbohrungen dienenden Querbohrungen (17) beidseitig der Querbohrungen Dichtringe (19, 51) angeordnet sind, wobei die Fasen (58, 54) an den gegenüberliegenden Stützwänden (59, 52) ausgebildet sind.

4. Druckbegrenzungsventil nach Anspruch 3,
**dadurch gekennzeichnet,**
daß auch der dem Steuerkolben (60) Zugeordnete Dichtring (75) aus geringe Reibung erzeugendem Kunststoff besteht und in einer mit Fase (77) ausgerüsteten Nut (76) angeordnet ist.

5. Druckbegrenzungsventil nach Anspruch 1,
**dadurch gekennzeichnet,**
daß der Dichtring (19, 51, 75) von einem Kuststoffrohr abgedreht ist.

6. Druckbegrenzungsventil nach Anspruch 1 oder einem der nachfolgenden Ansprüche,
**dadurch gekennzeichnet,**
daß der Kunststoff der Dichtringe (19, 51, 75) ein Polytetrafluorethylenmaterial mit einer Shore-Härte von D 50 - 90 ist.

7. Druckbegrenzungsventil nach Anspruch 1 oder Anspruch 9,
**dadurch gekennzeichnet,**
daß in die Eintrittsbohrung (13) des Anschlußstücks (5) eingangsseitig eine den Dichtring (19) fixierende, nach innen und außen abgesetzte Steckmuffe (85) eingesetzt und mit einem O-Ring (8) ausgerüstet ist.

8. Druckbegrenzungsventil nach Anspruch 3,
**dadurch gekennzeichnet,**
daß in die Eintrittsbohrung (13) im Anschlußstück (4, 5) ausgangsseitig eine den oberen Dichtring (51) fixierende und zugleich den Steuerkolben (60) führende, einen O-Ring (91) aufweisende Schraubführung (90) angeordnet ist.

## Claims

1. A pressure limiting valve (1) to protect hydraulic units in underground mining, particularly for protecting the hydraulic support system from sudden overloading as the result of rock burst or similar effects, and with, disposed in the valve housing (2) and adapted for displacement in the inlet port (13) against the force of the valve spring (11) and blocking the pressure medium in respect of the outlet ports, the valve piston (10) which comprises a blind bore (14) and, extending therefrom, radial bores (15, 16) which are constructed in matching fashion with a gasket (19) disposed in the connection piece (4, 5) and consisting of a very hard synthetic plastics material which generates minimal friction, characterised in that the gasket (19) consists of polytetrafluoroethylene and is a cross-sectionally rectangular ring and in that the annular groove (15) accommodating the rectangular gasket (19) has on the sealing edge (56) in the groove bottom (57) a chamfer (58) which connects the groove bottom (57) and the supporting wall (59) which extends minimally above the radial bores (15, 16) of the closed valve (1).

2. A pressure limiting valve according to Claim 1, characterised in that the chamfer (58) is of arcuate shape.

3. A pressure limiting valve according to Claim 1, characterised in that in the case of a valve piston (10) with an integrated control piston (60) and transverse bores (17) serving as outlet ports and constructed between the spaces (46, 47) with the same pressure there are on either side of the transverse ports gaskets (19, 51), the chamfers (58, 54) being constructed on the oppositely disposed bracing walls (59, 52).

4. A pressure limiting valve according to Claim 3, characterised in that also the gasket (75) associated with the control piston (60) consists of a synthetic plastics material which creates minimal friction and is disposed in a groove (76) in which there is a chamfer (77).

5. A pressure limiting valve according to Claim 1, characterised in that the gasket (19, 51, 75) is turned out of a synthetic plastics tube.

6. A pressure limiting valve according to Claim 1 or one of the subsequent Claims, characterised in that the synthetic plastics material of the gaskets (19, 51, 75) is a polytetrafluoroethylene material with a Shore hardness of D 50 - 90.

7. A pressure limiting valve according to Claim 1 or Claim 9, characterised in that an inwardly and outwardly stepped push-in sleeve (85) which fixes the gasket (19) is inserted into the inlet side of the entry port (13) of the connecting piece (5) and is equipped with an O-ring.

8. A pressure limiting valve according to Claim 3, characterised in that a screw-guide (19) comprising an O-ring (91) guiding the control piston (16) and at the same time fixing the upper gasket (51) is disposed on the outlet side of the inlet port (13) in the connecting piece (4, 5).

## Revendications

1. Clapet à limitation de pression (1) pour la protection des installations hydrauliques d'exploitations minières, notamment des bigues hydrauliques, contre des surcharges soudaines résultant des coups de charge ou autres phénomènes, du type dans lequel le corps (2) de clapet contient dans son orifice d'admission (13) un piston (10) qui y est monté mobile à l'encontre de la sollicitation d'un ressort (11) pour empêcher la sortie de l'agent de pression par des orifices d'évacuation et qui comprend un alésage (14) borgne d'où débouchent des trous (15, 16) radiaux qui sont placés en correspondance avec un joint (19) d'étanchéité qui est disposé dans un raccord (4, 5) et qui est fait en un matériau synthétique engendrant un très petit coefficient de frottement et présentant une grande dureté, et caractérisé en ce que le joint (19) est fait en polytétrafluoréthylène et est en anneau à section droite rectangulaire, en ce que la gorge (55) recevant ce joint (19) est munie d'un chanfrein (58) qui est ménagé sur le bord (56) de son fond (57), qui relie le fond (57) et la portée (59) et qui se développe immédiatement au-dessus des trous radiaux (15, 16) lorsque le clapet (1) est fermé.

2. Clapet selon la revendication 1, caractérisé en ce que le chanfrein (58) est partiellement circulaire.

3. Clapet selon la revendication 1, caractérisé en ce que des joints d'étanchéité (19, 51) sont disposés de part et d'autre de passages (17) transversaux qui servent d'orifices d'évacuation et qui sont ménagés entre les chambres (46, 47) où règne une pression égale d'un piston (10) à piston de commande (60) intégré et en ce que les chanfreins (58, 54) sont ménagés sur des portées (58, 52) en vis-à-vis.

4. Clapet selon la revendication 3, caractérisé en ce que le piston de commande (60) comprend aussi un joint (75) d'étanchéité fait en un matériau synthétique engendrant un petit coefficient de frottement, et logé dans une gorge (76) munie d'un chanfrein (77).

5. Clapet selon la revendication 1, caractérisé en ce que le joint d'étanchéité (19, 51, 75) est obtenu à partir d'un tube en matériau synthétique.

6. Clapet selon la revendication 1 ou une revendication qui la suit, caractérisé en ce que le matériau synthétique dont est fait le joint (19, 51, 75) est un polytétrafluoréthylène avec une dureté Shore de 50-90D.

7. Clapet selon l'une des revendications précédentes, caractérisé en ce que le joint (19) d'entrée de l'orifice d'admission (13) du raccord (5) est maintenu par un manchon (85) étagé vers l'intérieur et vers l'extérieur et muni d'un joint torique (8).

8. Clapet selon la revendication 3, caractérisé en ce que le joint supérieur (51) de sortie de l'orifice d'admission (13) du raccord est maintenu par un guide fileté (90) qui dirige aussi le piston de commande (60) et qui porte un joint torique (91).
